# EUROPÄISCHE PATENTANMELDUNG

(11) **EP 0 523 437 A1**
(43) Veröffentlichungstag der Anmeldung: **20.01.1993**
(21) Anmeldenummer: 92110967.4
(22) Anmeldetag: 29.06.1992
(51) Int. Cl.: G01N 27/22

(54) **Kapazitiv messendes chemisches Sensorsystem**

(30) Priorität: 06.07.1991 DE 4122408
(71) Anmelder: BASF Aktiengesellschaft, D-67063 Ludwigshafen (DE)
(72) Erfinder: Hoffmann, Bernd F.W., Prof. Dr., W-7500 Karlsruhe 21 (DE); Erbach, Rainer, W-7500 Karlsruhe 1 (DE); Wegner, Gerhard, Prof. Dr., W-6500 Mainz-Drais (DE); Fuchs, Harald, Dr., W-6719 Carlsberg (DE); Schrepp, Wolfgang, Dr., W-6900 Heidelberg (DE); Schaub, Matthias, W-6500 Mainz (DE)

(57) **Zusammenfassung**

Die Erfindung betrifft ein miniaturisierbares, kapazitiv messendes chemisches Sensorsystem auf Halbleiter-Basis, bestehend aus Sensor und Referenzelement, die mit dem zu messenden Elektrolyt in Kontakt zu bringen sind, wobei das Referenzelement zum Sensor in Serie geschaltet ist, das Referenzelement aus einem hochdotierten Halbleitersubstrat oder Metall/Halbleitersubstrat, das mit einer Membran überzogen ist, besteht und der Sensor aus einem Isolator/Halbleiter-Substrat, das mit einer sensitiven Membran beschichtet ist, besteht und die sensitive Membran des Sensors empfindlicher als die des Referenzelements ist.

Sensor und Referenzelement dieses Sensorsystems können entweder auf ein und demselben Chip aufgebracht sein oder aus einzelnen Komponenten bestehen, die leicht gegeneinander ausgetauscht werden können.

## Beschreibung

Die Erfindung betrifft ein kapazitiv messendes chemisches Sensorsystem auf Halbleiterbasis zur Messung von Konzentrationen in flüssigen Elektrolyten, wobei ein Teil des Systems aus dem eigentlichen Sensor und der andere Teil aus einem Referenzelement besteht, die zueinander in Serie geschaltet sind, in der Art, daß auf die Verwendung konventioneller Referenzelektroden (Ag/AgCl- oder Kalomel-Elektroden) verzichtet werden kann. Dadurch besteht die Möglichkeit einer Miniaturisierung in Kompatibilität zur Halbleitertechnologie. Die Wandlung von einem chemischen in ein elektrisches Signal erfolgt unter Ausnutzung des bekannten Feldeffektes.

Die Gestaltung integrierter chemischer Sensoren auf Basis ionenselektiver Feldeffekt-Transistoren ist bekannt und wird beispielsweise von J. Janata und R.J. Huber in Solid State Chemical Sensors, Academic Press, New York, 1985, Ch. 2, p. 66 und Ch. 3 sowie von A. Sibbald, Recent advances in field-effect chemical microsensors, J. Mol. Electron., 2 (1986) 51 bis 83 beschrieben. Die Verwendung von CHEMFETs als online-Sensoren zur Kontrolle chemischer Prozesse wird durch einige noch ungelöste Probleme verhindert, besonders durch mangelnde Langzeitstabilität und geringe Adhäsion der chemisch sensitiven Schicht. Vor einigen Jahren wurden Langmuir-Blodgett-Filme (LB Filme) (vgl. J. Am. Chem. soc., 57 (1935) 1007 - 1022) als Alternative zu den üblicherweise verwendeten konventionell aufgebrachten Polymeren, wie PVC oder Polyvinylalkohol (vgl. G.G. Roberts, An applied science perspective of Langmuir-Blodgett films, Adv. Phys., 34 (1985) 1-38) vorgeschlagen. Übliche LB-Filme amphiphiler Stoffe weisen jedoch die gleichen Stabilitätsprobleme auf. Vor kurzem wurden nun mit LB-Filmen von Phthalocyaninato-Polysiloxan-Polymeren ein Stoff gefunden, der sich als ionensensitiver Teil in Elektrolyt/Isolator/Halbleiter-(EIS)-Strukturen hinsichtlich Langzeitstabilität und Empfindlichkeit für Protonen als sehr vorteilhaft erwiesen hat und gegenüber Alkalimetallionen keine Querempfindlichkeit zeigt (vgl. A. Vogel, B. Hoffmann, Th. Sauer und G. Wegner: Langmuir-Blodgett Films of Phthalocyaninato-Polysiloxane Polymers as a novel Type of CHEMFET Membrane; Sensors and Actuators, Vol. B1 (1990) S. 408-412; Elsevier Sequoia/Printed in the Netherlands). In der DE-A 40 17 905 wurde auch eine Referenzelektrode für chemische Sensoren auf Basis ionenselektiver Feldeffekt-Transistoren (CHEMFETs) vorgeschlagen, die dünne Polyglutamat-(=PG)-schichten als insensitive Membran auf Isolator/Halbleiter-Substraten tragen.

Aufgabe der vorliegenden Erfindung ist es, ein kapazitiv messendes chemisches Sensorsystem aus Sensor und Referenzelement aufzuzeigen, das einfach herstellbar ist, möglichst geringe Querempfindlichkeit aufweist und sich für die Miniaturisierung eignet, wobei dessen Einzelkomponenten leicht austauschbar sein sollen.

Überraschenderweise wurde gefunden, daß sich dies erreichen läßt, wenn man eine sensitive Membran auf ein Isolator/Halbleitersubstrat aufbringt und die insensitive Membran auf ein hochdotiertes Halbleitersubstrat oder Metall/Halbleitersubstrat, wobei letztere keinen Feldeffekt aufweisen und nur als Trägerelektrode wirken. Außerdem ist genau der umgekehrte Aufbau möglich, also die insensitive Membran auf einem Isolator/Halbleitersubstrat und die sensitive Membran auf einem hochdotierten Halbleitersubstrat bzw. Metall/Halbleiter-Substrat.

Gegenstand der vorliegenden Erfindung ist ein miniaturisierbares, kapazitiv messendes chemisches Sensorsystem auf Halbleiter-Basis, bestehend aus Sensor und Referenzelement, die mit der Meßlösung (Elektrolyt) in Kontakt zu bringen sind, das dadurch gekennzeichnet ist, daß das Referenzelement zum Sensor in Serie geschaltet ist, wobei das Referenzelement aus einem hochdotierten Halbleitersubstrat oder Metall/Halbleitersubstrat, das mit einer Membran überzogen ist, besteht und der Sensor aus einem Isolator/Halbleiter-Substrat, das mit einer sensitiven Membran beschichtet ist, besteht, wobei die sensitive Membran des Sensors empfindlicher als die des Referenzelements ist.

Der Unterschied der Empfindlichkeit der Sensormembran zu der der Referenzelementmembran, ausgedrückt durch das Verhältnis von Spannungsdifferenz zu Konzentrationsänderung (gemessen in mV/negativer Logarithmus der Konzentration) ist vorzugsweise doppel so groß wie die des Referenzelements.

In diesem Sensorsystem kann die sensitive Sensormembran auf ein hochdotiertes Halbleitersubstrat oder ein Metall/Halbleitersubstrat aufgebracht sein und die weniger sensitive Membran auf ein Isolator/Halbleiter-Substrat.

Sensor und Referenzelement können entweder auf ein und demselben Chip aufgebracht sein oder aus einzelnen Komponenten bestehen, die leicht gegeneinander ausgetauscht werden können.

Im erfindungsgemäßen Sensorsystem kann die Sensormembran vorzugsweise aus dem gleichen Basismaterial bestehen wie die Membran des Referenzelementes, wobei die Sensormembran durch Einbringen oder Anbinden von selektiv wirkenden Gruppen sensitiv gemacht werden kann.

Die Membranen für das erfindungsgemäße Sensorsystem können nach der Langmuir-Blodgett-Technik aufgebracht worden sein oder durch Aufdampfen, Sputtern, Epitaxie, CVD (= Chemical Vapour Deposition) oder Spincoaten auf die Substrate.

Als Basis-Membran werden vorzugsweise organische Polymere, wie z.B. Poly(γ-methyl-L-glutamat-co-γ-nalkyl-L-glutamat), worin n-Alkyl für C₁₀H₂₁ bis C₂₅H₅₁ steht und der n-Alkyl-L-glutamat-Anteil zwischen 20 und 40 % ist, eingesetzt.

Zur Herstellung eines Na⁺-Sensors können die Membranen für Referenzelement und Sensor aus Polyglutamat bestehen, wobei die Sensormembran durch Einbringen von Ionophoren sensitiv für Na⁺-Ionen gemacht worden ist.

Die sich bei dem erfindungsgemäßen System ergebende Empfindlichkeit ist die Differenz der Empfindlichkeit von Sensormembran und Referenzmembran. Als Empfindlichkeit wird erfindungsgemäß die Verschiebung der Kapazitäts-Spannungskurven (= C/V-Kurven) in Abhängigkeit von der Konzentration im Elektrolyten entlang der Spannungsachse verstanden.

Die Beschichtung der Substrate mit den Membranen kann nach allen üblichen Techniken erfolgen, mit denen es möglich ist, reproduzierbar Membrandicken von wenigen nm bis einige µm herzustellen, insbesondere durch Langmuir-Blodgett-Technik, Aufdampfen, Sputtern, Epitaxie, CVD oder Spin-Coaten.

DIe Langmuir-Blodgett-Technik, die dazu geeigneten Apparaturen und die Voraussetzungen für die Durchführbarkeit dieser Methode sind bekannt und beispielsweise beschrieben in G.L. Gaines, "Insoluble Monolayers at Liquid-Gas-Interfaces", Interscience Publishers, 1966.

Die besonderen Vorteile der Erfindung bestehen in der einfachen Herstellung des Sensorsystems bzw. der Einzelkomponenten Sensor und Referenzelement im Vergleich zur aufwendigen Herstellung von CHEMFETs, der Möglichkeit einer Miniaturisierung, das einfache und billige Austauschen von Sensorsystem bzw. der Einzelkomponenten bei geeigneter Architektur der Halterung, der Möglichkeit unterschiedliche Sensoren und Referenzelemente auf einem Chip zu integrieren oder diese als einzelne Komponenten, z.B. in einer Durchflußzelle zu verwenden, der weitgehenden Kompensation von Querempfindlichkeiten, Driften, Temperatur- und Lichteinflüssen.

Dies gelingt insbesondere dadurch, daß die Sensor- und die Referenzmembran aus demselben Basismaterial bestehen, wobei die Sensormembran durch Einbringen oder Anbinden von sensitiven Gruppen gezielt für die gewünschte Anwendung selektiv gemacht werden kann.

Ein weiterer Vorteil besteht darin, daß das Referenzelement einfach in Serie zu dem Sensor geschaltet wird und somit ohne schaltungstechnische Änderungen die konventionellen Referenzelektroden ersetzen kann.

Zum Aufbau des erfindungsgemäßen Sensorsystems ist im einzelnen folgendes auszuführen:
In Fig. 1 ist der prinzipielle Aufbau eines kapazitiven Sensors, wie er üblicherweise in Elektrolyt/Isolator/Halbleitersystemen verwendet wird, schematisch dargestellt. Darin bedeuten 1=Elektrolyt, 2=Elektrolytgefäß, 3=Abdichtung, 4=Isolator (z.B. SiO₂), 5=Halbleiter (z.B. p-Si), 6=Metallisierung (z.B. Gold oder Aluminium), 7=sensitive Membran (z.B. Si₃N₄).
In Fig. 2a-d sind prinzipielle Möglichkeiten zum Aufbau des Referenzelements dargestellt.

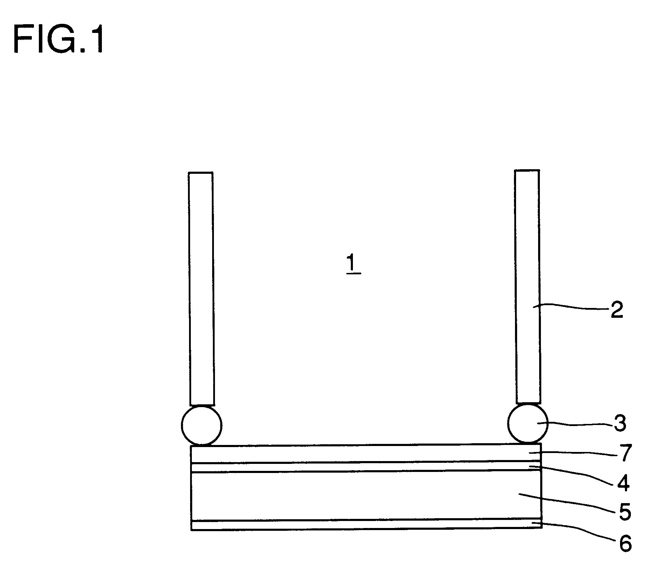

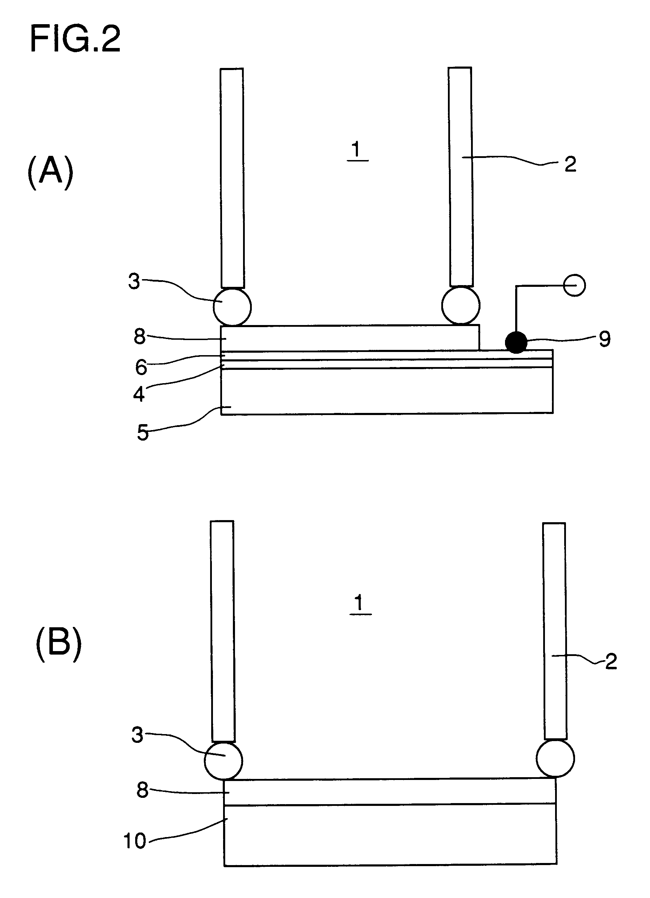

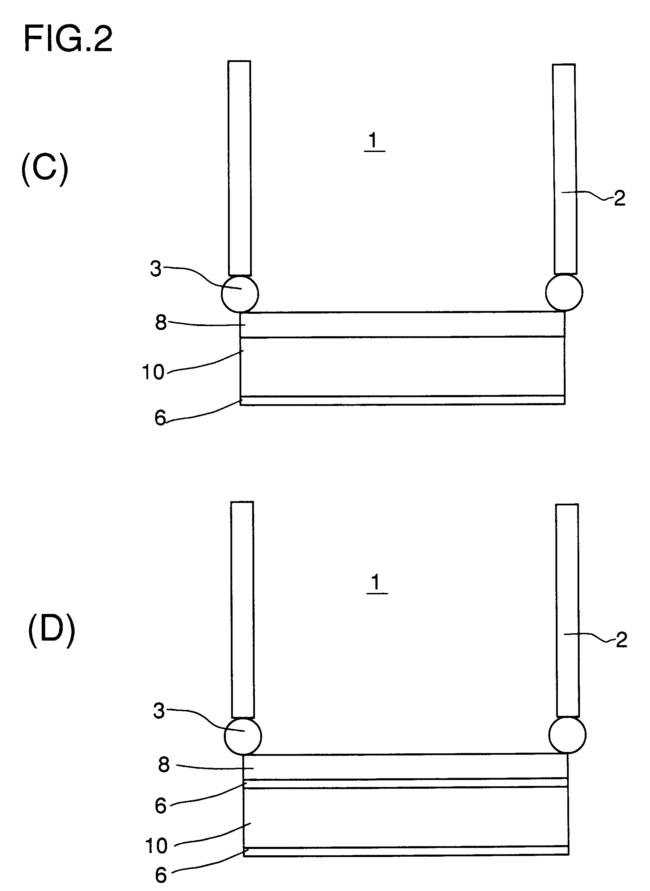

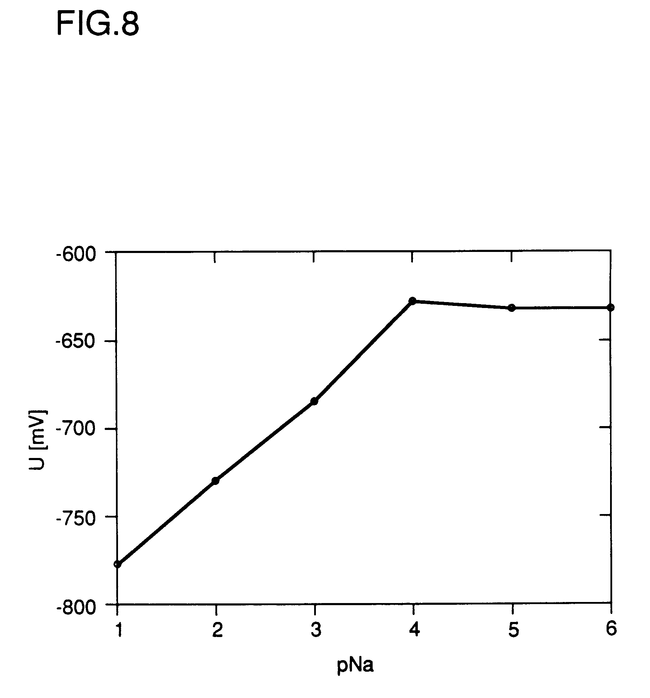

   - Fig. 2(A):: Darin haben die Zahlen 1-6 die gleiche Bedeutung wie in Fig. 1, 8=insensitive Membran (z.B. Polyglutamat=PG), 9=Kontaktabgriff an Oberseite des Substrats.
   - Fig. 2(B):: Hierin haben die Zahlen 1-8 die gleiche Bedeutung wie in Fig. 2(A), 10=Metall oder hochdotiertes Halbleitersubstrat (z.B: n⁺-Si).
   - Fig. 2(C):: Die Zahlen 1-3 und 6 haben die gleiche Bedeutung wie in Fig. 1, 10=hochdotiertes HL-Substrat (z.B. n⁺-Si), 8=insensitive Membran (z.B. PG).
   - Fig. 2(D):: Die Zahlen 1-10 haben die gleiche Bedeutung wie in Fig. 2(C).

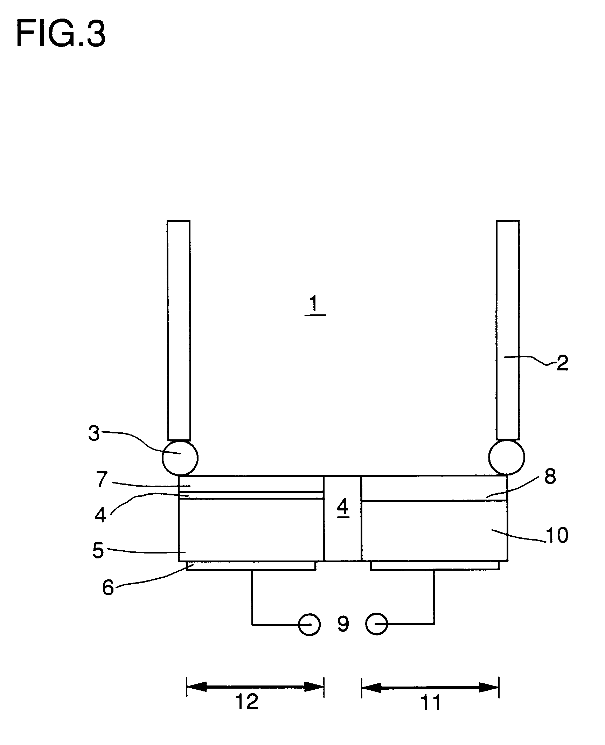

In Fig. 3 ist das komplette kapazitive Sensorsystem dargestellt, wobei sich 12=Sensor und 11=Referenzelement entweder auf einem Chip, getrennt durch eine Isolation=4 befinden, oder auch räumlich getrennt sein können. Die Zahlen 1-6 haben die gleiche Bedeutung wie in Fig. 1; 8=insensitive Membran (z.B. PG), 7=sensitive Membran (z.B. Si₃N₄), 9=elektrischer Anschluß, 10=hochdotiertes HL-Substrat (z.B. n⁺-Si). Sensitive und insensitive Membran können auch untereinander vertauscht werden.

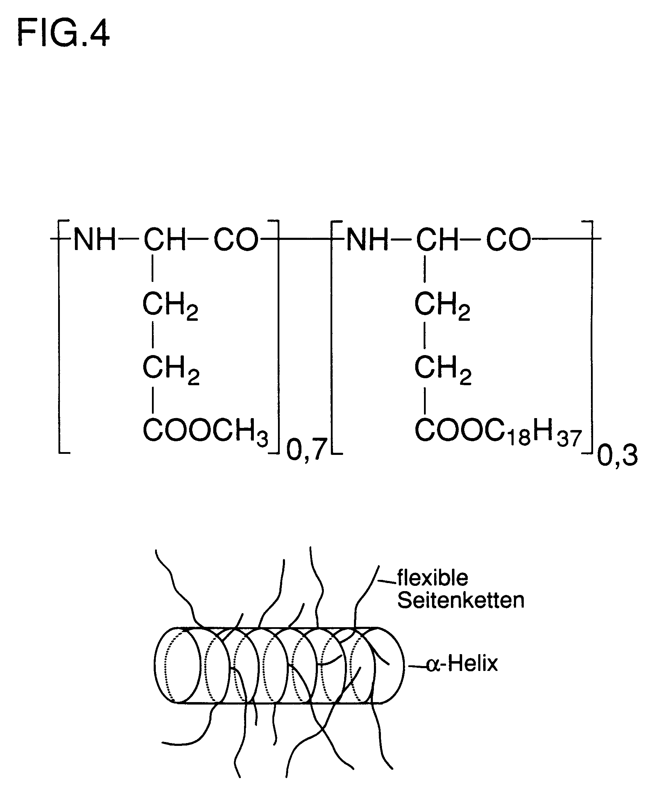

Fig. 4 zeigt als Beispiel für ein bevorzugtes Membranmaterial das Formelschema von Poly(γ-methyl-L-glutamat-co-γ-n-alkyl-L-glutamat), worin 70 mol-% γ-Methyl-L-glutamateinheiten und 30 mol-% γ-n-Octadecyl-L-glutamateinheiten enthalten sind.

Weitere bevorzugte Poly(γ-methyl-L-glutamat-co-γ-n-alkyl-L-glutamate) sind auch solche, in denen n-Alkyl für C₁₀H₂₁ bis C₂₅H₅₁ steht und der n-Alkyl-L-glutamat-Anteil zwischen 20 und 40 mol-% beträgt. Diese Copolyglutamate können mit beliebigem Polymerisationsgrad, vorzugsweise mit einem Polymerisationsgrad von 20 bis 2000 eingesetzt werden, wobei eine helikale Struktur bevorzugt ist. Diese Copolymerisate lassen sich besonders vorteihaft mit der Langmuir-Blodgett-Technik auf die zu beschichtenden Substrate auftragen. Dazu werden sie im allgemeinen in geeigneten organischen Lösungsmitteln, vorzugsweise in Halogen-Kohlenwasserstoffen, wie z.B. Chloroform gelöst, wobei die Konzentration des PG im Lösungsmittel zweckmäßigerweise im Bereich von 0,001 bis 0,1 %, beispielsweise bei etwa 0,02 % liegt. Die Beschichtung erfolgt mit Hilfe einer Lauda-Filmwaage, an der durch eine Laminarflowbox eine Reinstraumatmosphäre erzeugt wird. Die Copolyglutamatlösung wird auf einer thermostatisierten Reinstwassersubphase gespreitet, nach Abdunsten des Lösungsmittels auf 20 mN/m Oberflächenspannung komprimiert und nach Erreichen einer konstanten Filmfläche das zu beschichtende Substrat zweckmäßigerweise durch einen Lauda-Filmlift mit einer Geschwindigkeit von 10 mm/min durch den Polymerfilm in die Subphase getaucht. Beim Ein- und Austauchen wird so jeweils eine Monoschicht übertragen. Nach dem Übertragen der gewünschten Anzahl von Monoschichten, die zwischen 2 und 60 liegen kann, wird das Substrat getrocknet und gegebenenfalls getempert.

Für den Fall, daß ebenfalls geeignete Homopolyglutamate, wie z.B. Poly(γ-methyl-L-glutamat) oder Poly(γ-benzyl-L-glutamat) zur Beschichtung von Isolator/Halbleiter oder hochdotierten Halbleitersubstraten oder Metall/Halbleitersubstraten eingesetzt werden kann, erfolgt dies zweckmäßigerweise durch Aufschleudern (= Spincoating, bei 500 bis 2000 U/min) und anschließende Entfernung des Lösungsmittels oder durch Aufdampfen oder Sputtern. Auch auf diese Weise lassen sich entsprechend dünne und wirksame Schichten erzeugen.

Die Herstellung geeigneter Polyglutamate und Copolyglutamate kann beispielsweise der EP-A 03 00 420 entnommen werden. Anstelle der Polyglutamate können auch andere organische Polymere, beispielsweise Cellulosederivate als Membranmaterial eingesetzt werden.

Die Schichtdicke der Membranen für Sensor bzw. Referenzelement kann wenige nm bis einige µm betragen, beispielsweise 2 nm bis zu etwa 5 µm. Zur Beschichtung eignen sich neben der LB-Technik auch Spincoaten, Aufdampfen, Epitaxie, CVD und Sputtern, wie beispielsweise in I. Ruge, Halbleitertechnologie, Springer-Verlag (1984) (Seiten 67, 82, 134, 263 und 265) beschrieben.

Besonders vorteilhaft ist das erfindungsgemäße Sensorsystem, wenn für Sensor und Referenzelement die Membranen aus demselben Basismaterial bestehen, wie z.B. dem oben genannten PG, wobei die Sensormembran z.B. durch Einmischen von Ionophoren gezielt selektiv gemacht werden kann.

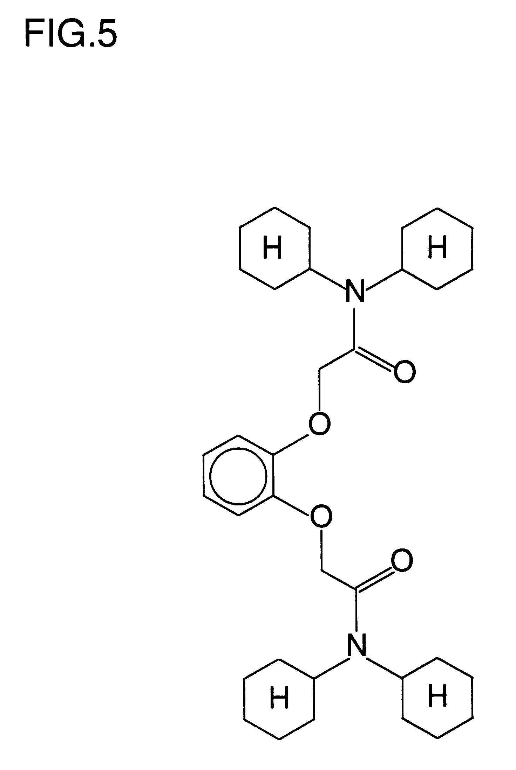

Fig. 5 zeigt die Formel eines handelsüblichen Na-Ionophors, der in einem Verhältnis von 1-10 % bezogen auf die Anzahl der Monomere im PG dem PG beigemischt werden kann, wodurch die Sensormembran Na⁺-Ionen detektieren kann.

Als Halbleiter/Isolatorsubstrate für das erfindungsgemäße Sensorsystem eignen sich Silizium/SiO₂, Si/SiO₂/SiₓN_{y} (mit vorzugsweise x=3 und y=4), Si/SiO₂/ZrO₂, Germanium/GeO₂ sowie III-V-Halbleiter wie GaAs, GaInP mit isolierenden Schichten anstelle eines Oxids. Bevorzugtes Halbleiter/Isolatorsubstrat ist Si/SiO₂, insbesondere p-Si/SiO₂, beispielsweise p-dotierte Siliziumwafer mit einer Leitfähigkeit von 17-30 1/Ωcm mit einer SiO₂-Schichtdicke von 50 +/- 5 nm.

Als hochdotierte Halbleiter für das erfindungsgemäße Sensorsystem eignen sich Silizium, Germanium sowie III-V-Halbleiter wie GaAs oder GaInP, die bis zur Entartung, z.B. durch Ionenimplantation oder Diffusion, dotiert werden können, so daß sie sich quasi metallisch verhalten. Bevorzugt sind hochdotierte p- oder n-Siliziumsubstrate mit einer Dotierung von größer als 10¹⁸ 1/cm³ und einer Leitfähigkeit von mehr als 0,1 1/Ωcm. Als Metalle für die Metall/Halbleitersubstrate kommen alle Metalle in Frage, die eine Leitfähigkeit von mehr als 0,1 1/Ωcm haben, insbesondere Gold und Aluminium auf p-Si bzw. Chrom und Nickel auf n-Si. Grundsätzlich möglich sind auch rein metallische Substrate insbesondere aus den genannten Metallen.

Das Sensorsystem kann entweder einzeln aus Sensor und Referenzelement zusammengebaut werden, je nach gewünschter Anwendung, oder es werden beide Teile auf einem Chip voll kompatibel zur Halbleitertechnologie integriert.

Die folgenden Beispiele sind gemäß Fig. 3 als Sensorsysteme aufgebaut, wobei sich Sensor und Referenzelement auf getrennten Substraten befinden und so plaziert sind, daß beide Kontakt zur Elektrolytlösung haben.

Die in den Beispielen genannten Teile und Prozente sind, soweit nicht anders angegeben, Gewichtsteile bzw. Gewichtsprozente.

### Beispiel 1

### pH-Sensorsystem

Als Sensor diente ein Al/Si/SiO₂/Si₃N₄-Wafer (vom Fraunhofer Institut, München, bezogen).

Für das Referenzelement wurden Wafer aus hochdotiertem (Dotierdichte 10¹⁹ 1/cm³) n-Silizium verwendet. Vor der Beschichtung wurden diese für 15 Minuten mit 10 %iger HF behandelt, um Oxidschichten restlos zu entfernen. Zum Hydrophobisieren können die Wafer noch zusätzlich mit einer 40 %igen Lösung von Hexamethyldisilazan in Chloroform bei 40°C silanisiert werden.

Die Langmuir-Blodgett(=LB)-Beschichtung geschah an einer Lauda-Filmwaage, die in einer Laminarflowbox untergebracht war. Die Beschichtung mit PG wurde wie oben beschrieben durchgeführt, wobei mehrere Proben mit unterschiedlicher Dicke (2-32 Monolagen) hergestellt wurden. Auf der Rückseite dieser Referenzelemente wurde ein Kontakt aus Al/Au aufgebracht.

Beide, der pH-Sensor und das Referenzelement, hatten eine Größe von 15x15 mm². Sie wurden so in einen speziellen Probenhalter (Durchflußzelle) eingebaut, daß sie über die Elektrolytlösung miteinander in Kontakt waren. Außerdem konnte mit dem Aufbau der pH-Sensor auch gegen eine konventionelle Ag/AgCl-Referenzelektrode (Fa. Ingold) gemessen werden. Der gesamte Aufbau wurde in einer lichtdichten Metallbox untergebracht. Die Aufnahme der C/V-Kurven wurde mit einem Hewlett-Packard 4272 LCR-Meter und angeschlossenem PC durchgeführt. Die Vorspannung wurde im Bereich von -2500 bis +500 mV in 100 mV Schritten durchfahren. Als Meßfrequenz wurde 1 kHz verwendet, die Meßwechselspannung betrug 20 mV. Die Änderung des pH-Wertes in der Meßzelle geschah rechnergesteuert durch Titration einer 0,1 m KCl-Lösung mit NaOH und HCl.

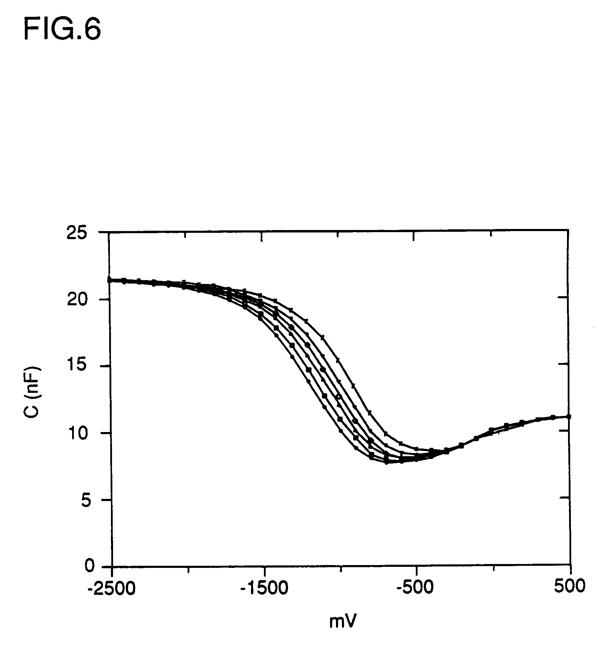

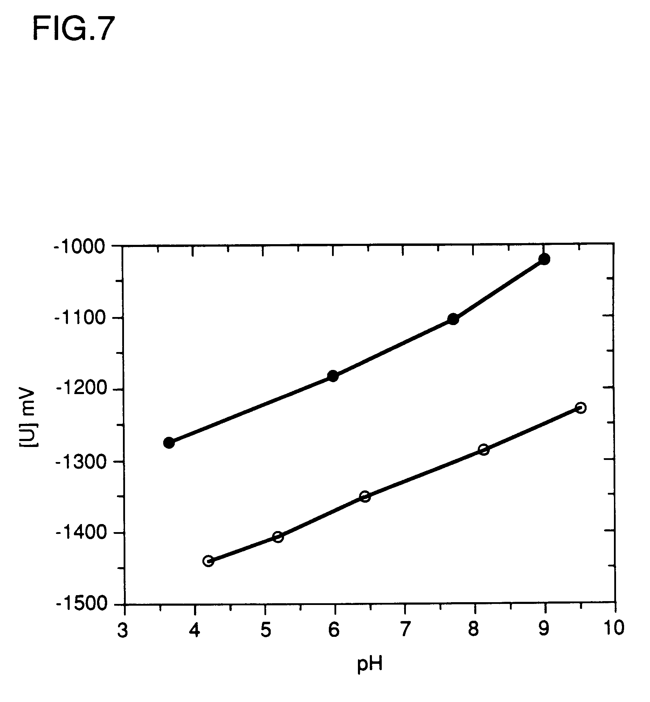

Fig. 6 zeigt die typischen C/V-Kurven in Abhängigkeit von dem pH-Wert des oben beschriebenen Sensorsystems aus pH-Sensor und Referenzelement, Fig. 7 einen Vergleich der ausgewerteten C/V-Kurven des erfindungsgemäßen pH-Sensorsystems (untere Kurve) mit einer konventionellen Messung (pH-Sensor gegen Ag/AgCl-Referenzelektrode, obere Kurve). Man erkennt die hervorragende Linearität des erfindungsgemäßen Sensorsystems.

### Beispiel 2

### Na-Sensorsystem

Das Referenzelement wurde wie in Beispiel 1 beschrieben hergestellt.

Für die Herstellung eines Na-Sensors wurden p-dotierte Si-Wafer mit einer Leitfähigkeit von 17-30 1/Ωcm und einer SiO₂ Schichtdicke von 50 nm verwendet. Die Probengröße betrug 15x15 mm². Zur Reinigung wurden die Wafer sukzessive mit folgenden Lösungen jeweils bei 40°C im Ultraschallbad behandelt: zunächst wurden sie mit Aceton zur Entfernung des Photolacks (10 Min.) behandelt, dann mit Reinstwasser gespült, anschließend mit einer Mischung aus H₂SO₄, H₂O₂ und H₂O im Verhältnis 1:1:5 (10 Minuten) behandelt, anschließend mit Reinstwasser gespült, dann mit einer Mischung aus 25 %igem NH₃, 30 %igem H₂O₂ und H₂O im Verhältnis 1:1:5 (60 Min.) behandelt, mit Reinstwasser gespült, mit 10 %iger HCl (2 Min.) behandelt, mit Reinstwasser gespült und anschließend im Trockenschrank bei 50°C getrocknet.

Die verwendeten Chemikalien waren p.A. Qualität, das Reinstwasser wurde mit einer Reinstwasseranlage (Seral pro 90) gewonnen.

Das Hydrophobisieren geschah wie in Beispiel 1 beschrieben.

Als Membranmaterial wurde das oben genannte PG verwendet und dabei zusätzlich das Na-Ionophor III (Fluka) eingemischt, so daß auf 9 Wiederholeinheiten des PG genau 1 Ionophor entfiel.

Das Aufziehen dieses Materials geschah mit LB-Technik wie oben beschrieben. Zum Verhindern der Ausdiffusion der Ionophore wurde über die Sensormembran zusätzlich noch eine weitere reine PG-Schicht (2 Monolagen) aufgezogen.

Der Na-Sensor wurde zusammen mit dem Referenzelement in den oben genannten Probenhalter eingebaut.

Die Messung geschah wie oben, wobei jedoch diesmal von Hand Lösungen mit unterschiedlichen Na-Konzentrationen eingefüllt wurden (Na-Konzentration 10⁻⁶ bis 10⁻¹ molar = pNa = 1 bis 6; NaCl in TRIS-Puffer (= Tris(hydroxymethyl)aminomethan)).

Die ausgewerten C/V-Kurven, also die Spannungsverschiebung der Kurven in Abhängigkeit von der Na-Konzentration zeigt Fig. 8. Man erkennt die hohe Na^{⊕}- Empfindlichkeit im Bereich von pNa = 1 bis pNa = 4 (über 50 mV/pNa).

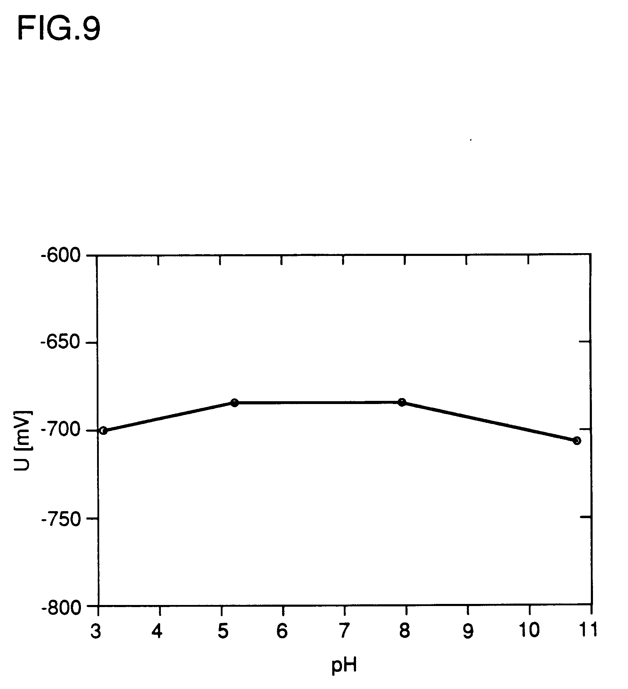

Zur Demonstration der automatischen Kompensation von Querempfindlichkeiten wurde im automatischen Titrierbetrieb bei einer fixen Na-Konzentration von 0,1 m NaCl der pH-Wert von pH = 3 bis pH = 11 geändert. Fig. 9 zeigt die Ergebnisse. Man erkennt, daß das Ausgangssignal über 8 pH-Stufen nahezu konstant bleibt und somit keine Querempfindlichkeit zu H^{⊕} vorhanden ist.

## Patentansprüche

1. Miniaturisierbares, kapazitiv messendes chemisches Sensorsystem auf Halbleiter-Basis, bestehend aus Sensor und Referenzelement, die mit der Meßlösung (Elektrolyt) in Kontakt zu bringen sind, dadurch gekennzeichnet, daß das Referenzelement zum Sensor in Serie geschaltet ist, wobei das Referenzelement aus einem hochdotierten Halbleitersubstrat oder Metall/Halbleitersubstrat, das mit einer Membran überzogen ist, besteht und der Sensor aus einem Isolator/Halbleiter-Substrat, das mit einer sensitiven Membran beschichtet ist, besteht, wobei die sensitive Membran des Sensors empfindlicher als die des Referenzelements ist.

2. Sensorsystem nach Anspruch 1, dadurch gekennzeichnet, daß der Unterschied der Empfindlichkeit der Sensormembran zu der der Referenzelementmembran, ausgedrückt durch das Verhältnis von Spannungsdifferenz zu Konzentrationsänderung (gemessen in mV/negativer Logarithmus der Konzentration) doppelt so groß ist wie die des Referenzelements.

3. Sensorsystem nach Anspruch 1, dadurch gekennzeichnet, daß die sensitive Sensormembran auf ein hochdotiertes Halbleitersubstrat oder ein Metall/Halbleitersubstrat aufgebracht ist und die weniger sensitive Membran auf ein Isolator/Halbleiter-Substrat aufgebracht ist.

4. Sensorsystem nach Anspruch 1, dadurch gekennzeichnet, daß Sensor und Referenzelement entweder auf ein und demselben Chip aufgebracht sind oder aus einzelnen Komponenten bestehen, die leicht gegeneinander ausgetauscht werden können.

5. Sensorsystem nach einem der vorhergehenden Ansprüche, dadurch gekennzeichnet, daß die Sensormembran aus dem gleichen Basismaterial besteht wie die Membran des Referenzelementes, wobei die Sensormembran durch Einbringen oder Anbinden von selektiv wirkenden Gruppen sensitiv gemacht worden ist.

6. Sensorsystem nach einem der vorhergehenden Ansprüche, dadurch gekennzeichnet, daß die Membranen nach der Langmuir-Blodgett-Technik auf die Substrate aufgebracht worden sind.

7. Sensorsystem nach einem der Ansprüche 1 bis 5, dadurch gekennzeichnet, daß die Membranen durch Aufdampfen, Sputtern, Epitaxie, CVD oder Spincoaten auf die Substrate aufgebracht worden sind.

8. Sensorsystem nach einem der vorhergehenden Ansprüche, dadurch gekennzeichnet, daß als Basismembran organische Polymere eingesetzt werden.

9. Sensorsystem nach einem der vorhergehenden Ansprüche, dadurch gekennzeichnet, daß als Basis-Membran ein Poly(γ-methyl-L-glutamat-co-γ -n-alkyl-L-glutamat), worin n-Alkyl für C₁₀H₂₁ bis C₂₅H₅₁ steht und der n-Alkyl-L-glutamat-Anteil zwischen 20 und 40 % ist, eingesetzt wird.

10. Sensorsystem nach einem der vorhergehenden Ansprüche, dadurch gekennzeichnet, daß die Membranen für Referenzelement und Sensor aus Polyglutamat nach Anspruch 9 bestehen, wobei die Sensormembran durch Einbringen von Ionophoren sensitiv für Na⁺-Ionen gemacht worden ist.
